# EUROPÄISCHE PATENTSCHRIFT

(11) **EP 2 453 556 B1**
(45) Veröffentlichungstag und Bekanntmachung des Hinweises auf die Patenterteilung: **03.05.2023**
(21) Anmeldenummer: 11002126.8
(22) Anmeldetag: 15.03.2011
(51) Int. Cl.: H02K 1/14, H02K 21/16, H02K 21/24, F04D 13/06, H02K 5/128, H02K 5/173

(54) **Elektromotor**
Electric motor
Moteur électrique

(30) Priorität: 11.11.2010 DE 102010051916; 11.11.2010 DE 102010051918
(43) Veröffentlichungstag der Anmeldung: 16.05.2012
(73) Patentinhaber: Grundfos Management a/s, 8850 Bjerringbro (DK)
(72) Erfinder: Fischer, Peter, 74842 Billensbach-Allfeld (DE)
(74) Vertreter: Patentanwälte Vollmann Hemmer Lindfeld Partnerschaft mbB

(56) Entgegenhaltungen:
- WO-A1-03/103114
- WO-A1-2008/019818
- DE-A1-102004 017 507
- US-A- 4 043 706
- US-A- 5 552 653

## Beschreibung

Die Erfindung betrifft einen Elektromotor mit einem Stator, einem Rotor und einem zwischen dem Stator und dem Rotor angeordneten Spaltrohr, d. h. einen nasslaufenden Elektromotor.

Derartige Motoren werden insbesondere bei Pumpenaggregaten eingesetzt, beispielsweise bei Umwälzpumpenaggregaten, wie Heizungs- oder Brauchwasserumwälzpumpen. Da es sich bei solchen Produkten um Massenprodukte handelt, gibt es ein Bestreben, diese Produkte möglichst kostengünstig und einfach zu fertigen auszubilden. Darüber hinaus soll ein möglichst hoher Wirkungsgrad erreicht werden, um den Energieverbrauch dieser Pumpenaggregate zu reduzieren.

WO 03/103114 A1 zeigt einen elektrischen Synchronmotor mit einer Vielzahl von Statorpolen mit jeweils einer elektrischen Spule auf. Dabei sind die Spulen zweier benachbarter Statorpole elektrisch so miteinander in Reihe geschaltet, dass die Statorpole entgegengesetzt gerichtete Magnetfelder erzeugen.

US 4,043,706 zeigt ein Pumpenaggregat mit einem als Spaltrohrmotor ausgebildeten elektrischen Antriebsmotor. Der Antriebsmotor weist einen Stator mit einer Vielzahl von Polstegen mit darauf angeordneten elektrischen Spulen auf.

Im Hinblick auf diesen Stand der Technik ist es Aufgabe der Erfindung, einen nasslaufenden Elektromotor sowie ein Pumpenaggregat mit einem solchen nasslaufenden Elektromotor bereitzustellen, welcher eine einfachere Verschaltung der elektrischen Spulen im Stator des Elektromotors ermöglichen und einen hohen Wirkungsgrad aufweisen. Diese Aufgabe wird durch einen Elektromotor mit den in Anspruch 1 angegebenen Merkmalen sowie durch ein Pumpenaggregat mit den in Anspruch 9 angegebenen Merkmalen gelöst. Bevorzugte Ausführungsformen ergeben sich aus den Unteransprüchen, der nachfolgenden Beschreibung sowie den beigefügten Figuren.

Der erfindungsgemäße Elektromotor weist als nasslaufender Elektromotor in bekannter Weise einen Stator, einen Rotor und ein zwischen dem Stator und dem Rotor angeordnetes Spaltrohr auf. Das Innere des Spaltrohrs ist im Betrieb flüssigkeitsgefüllt, sodass der Rotor in der Flüssigkeit rotiert. Erfindungsgemäß ist dabei unter einem Spaltrohr jedes Bauelement zu verstehen, welches geeignet ist, den Rotorraum von dem Statorraum zu trennen, d. h. es muss sich nicht unbedingt um ein rohrförmiges Bauelement handeln, sondern es kann sich auch um ein anders geformtes Bauelement, beispielsweise ein scheiben- oder kalottenförmiges Bauteil handeln.

Der Stator weist mehrere Statorpolpaare auf, wobei erfindungsgemäß vorgesehen ist, dass die Statorpolpaare nicht wie bei bekannten nasslaufenden Elektromotoren von diametral gegenüberliegenden Statorpolen gebildet werden, sondern jeweils von zwei nebeneinanderliegenden, d. h. benachbarten Statorpolen gebildet werden. Jeder Pol des Statorpolpaares ist in entgegengesetzter Richtung magnetisierbar. D. h. ein Pol weist an seinem freien Ende einen magnetischen Nordpol auf, während der andere Pol an seinem freien Ende einen magnetischen Südpol aufweist. Vorzugsweise werden so in radialer Richtung entgegengesetzt gepolte Magnetfelder erzeugt. Dies ist eine Ausgestaltung, bei welcher die Statorpole umfänglich um das Spaltrohr herum angeordnet sind. Die Statorpole sind in bekannter Weise vorzugsweise aus einem weichmagnetischen Material, beispielsweise aus Eisenblechen gebildet und werden durch Spulen bei deren Bestromung in gewünschter Weise magnetisiert, sodass die Magnetfelder zur Drehung des Rotors erzeugt werden.

Damit der Rotor mit den im Stator erzeugten Magnetfeldern in Wechselwirkung treten kann, weist er eine Mehrzahl über den Umfang verteilter permanentmagnetischer Rotorpole auf. Diese sind so ausgestaltet, dass ein magnetischer Fluss auch jeweils zwischen zwei benachbarten Rotorpolen möglich ist. Bei bekannten Rotoren nasslaufender Motoren erfolgt der magnetische Fluss zwischen zwei Rotorpolen in der Regel durch den Rotor hindurch zum diametral gegenüberliegenden Pol. Erfindungsgemäß ist nun vorgesehen, dass der magnetische Fluss in Umfangsrichtung zwischen zwei benachbarten Rotorpolen erfolgt. Dies hat den Vorteil, dass nicht der gesamte Rotor aus Magnetmaterial, sei es aus hartmagnetischem oder weichmagnetischem Material, gefertigt werden muss, um den magnetischen Fluss sicherzustellen. So wird die Menge des erforderlichen Magnetmaterials reduziert und der Rotor kann insgesamt leichter ausgebildet werden, wodurch sich die zu bewegende Masse reduziert. Die Ausbildung der Statorpolpaare mittels benachbarter Statorpole hat den Vorteil, dass die Verdrahtung der Spulen der einzelnen Statorpole vereinfacht wird. Darüber hinaus kann auch im Stator Material eingespart werden, da keine weichmagnetischen Rückschlusskörper zur Verbindung diametral gegenüberliegender Rotorpole erforderlich sind. Vielmehr ist es ausreichend, die benachbarten Statorpole, welche ein Statorpolpaar bilden, mit weichmagnetischen Rückflusselementen zu verbinden, sodass ein magnetischer Fluss zwischen diesen beiden Statorpolen möglich ist. Neben der Materialeinsparung wird somit auch zusätzlicher Raum gewonnen, was einen kompakteren Aufbau des gesamten Elektromotors ermöglicht.

Die Statorpole eines Statorpolpaares sind erfindungsgemäß als Polstege ausgebildet, welche vorzugsweise durch ein weichmagnetisches Verbindungselement miteinander verbunden sind. Die Polstege können dabei einzeln ausgebildet und mit dem weichmagnetischen Verbindungselement verbunden sein. Alternativ ist es auch denkbar, die Polstege und das Verbindungselement einteilig bzw. einstückig auszubilden. Sowohl die Polstege als auch das Verbindungselement sind vorzugsweise als Blechpaket ausgebildet. Die Polstege erstrecken sich beispielsweise in radialer oder in axialer Richtung parallel zur Drehachse des Motors und sind darüber hinaus bevorzugt zur Aufnahme von Spulen ausgebildet.

Die Statorpole sind als Polstege mit darauf angeordneten Spulen ausgebildet, wobei die Spulen zweier benachbarter, ein Statorpolpaar bildender Statorpole elektrisch in Reihe geschaltet sind. Diese Anordnung bewirkt, dass die beiden Polstege mit dem in Reihe geschalteten Spulen bei Bestromung der Spulen jeweils in entgegengesetzter Richtung magnetisiert werden, wie es oben beschrieben ist.

Erfindungsgemäß sind ferner die Spulen der Statorpole zweier diametral gegenüberliegender Statorpolpaare elektrisch in Reihe geschaltet. So wird erreicht, dass jeweils zwei diametral gegenüberliegende Statorpolpaare gleichzeitig bestromt werden. Da erfindungsgemäß ein Statorpolpaar jeweils zwei

Spulen aufweist, jede an einem der zusammengehörigen Statorpole, sind die Spulen jedes Statorpolpaares in Reihe geschaltet und dann diese Spulenpaare diametral gegenüberliegender Statorpolpaare ihrerseits in Reihe geschaltet.

Zweckmäßigerweise sind alle Spulen des Stators identisch ausgebildet. So wird die Teilevielfalt reduziert und die Fertigung bzw. Montage vereinfacht.

Erfindungsgemäß werden die Spulen durch eine am Stator angeordnete Leiterplatte miteinander verschaltet. Dazu können die Spulen beispielsweise axialseitig vorstehende Kontakte aufweisen, welche mit korrespondierenden Kontakten bzw. Leiterbahnen an der Leiterplatte elektrisch leitend in Eingriff treten. Die Kontaktelemente können beispielsweise als axial vorstehende Kontaktstifte ausgebildet sein, welche in entsprechende Löcher der Leiterplatte eingreifen und dort mittels einer Steckkupplung oder beispielsweise durch Verlöten elektrisch mit Leiterbahnen der Leiterplatte kontaktiert sind. Durch die Verwendung einer solchen Leiterplatte, welche auf die Spulen aufgesetzt oder an alle Spulen angesetzt wird, wird die elektrische Verschaltung der Spulen sehr einfach. So können alle Spulen separat vorgefertigt werden und dann bei der Montage durch die Leiterplatte kontaktiert werden. Es ist nicht erforderlich, einzelne Wicklungsdrähte von einer Spule zu der anderen Spule zu führen.

Die Leiterplatte weist weiter bevorzugt zumindest Teile einer Motorelektronik auf. So können auf der Leiterplatte direkt elektronische Bauelemente angeordnet sein, welche der Steuerung bzw. dem Betrieb des Elektromotors dienen. Insbesondere kann es sich dabei um Teile eines Frequenzumrichters bzw. elektronische Leistungsschalter handeln, welche für die gezielte Bestromung der einzelnen Spulen verantwortlich sind. Durch die Integration dieser Bauteile auf einer direkt am Stator angeordneten Leiterplatte wird ein sehr kompakter Aufbau erreicht, bei welchem die wesentlichen elektronischen Bauelemente zum Betrieb des Motors mit dem Stator und der Leiterplatte direkt in einem Statorgehäuse angeordnet werden können.

Der Elektromotor ist erfindungsgemäß als 2- oder 3-Phasen-Motor ausgebildet. Wenn der Elektromotor als 3-Phasen-Motor ausgebildet ist, kann er dann vorzugsweise sechs Statorpolpaare haben. Von diesen sechs Statorpolpaaren können jeweils zwei diametral gegenüberliegende Statorpolpaare die vorangehend beschriebene Reihenschaltung ihrer Spulen aufweisen, sodass immer zwei gegenüberliegende Statorpolpaare gleichzeitig bestromt werden, sodass auf diese Weise die 3-Phasen-Ausgestaltung erreicht wird. Alternativ ist der Elektromotor erfindungsgemäß als 2-Phasen-Motor ausgebildet, wobei er dann entsprechend vier oder acht Statorpolpaare aufweisen könnte, welche in der vorangehenden Weise ausgebildet sind und die vorangehend beschriebene Verschaltung ihrer Statorspulen aufweisen.

Gemäß einer weiteren bevorzugten Ausführungsform ist der Rotor Halbach-magnetisiert. Durch diese Magnetisierung wird ein starkes Magnetfeld am Außenumfang des Rotors und ein verringertes Magnetfeld im Inneren des Rotors erreicht. Der magnetische Fluss zwischen den Rotorpolen erfolgt dabei oberflächennah in Umfangsrichtung, sodass ein magnetischer Fluss zu einem diametral entgegengesetzten Rotorpol durch den Rotor hindurch nicht erforderlich ist. So kann, wie oben beschrieben, der Rotor in seinem Inneren leichter ausgebildet werden, da dort auf die Anordnung von weich- oder hartmagnetischem Material zur Sicherstellung des magnetischen Flusses verzichtet werden kann.

Vorzugsweise weist der Rotor einen Polring aus Magnetmaterial auf, in welchem die Rotorpole ausgebildet sind. Der Polring ist aus einem hartmagnetischen Material gebildet, in welchem die magnetischen Rotorpole durch entsprechende Magnetisierung eingebracht sind. Dabei kann die vorangehend beschriebene Halbach-Magnetisierung verwendet werden. Der Rotor weist an seinem Außenumfang abwechselnd Nord- und Südpole auf, der magnetische Fluss zwischen den Rotorpolen erfolgt in Umfangsrichtung durch das Material des Polringes. Der Polring kann dazu gegebenenfalls radial innenliegend eine ringförmige Hinterfütterung aus weichmagnetischem Material aufweisen.

Der Elektromotor ist vorzugsweise als Kugelmotor mit einem als Trennkalotte ausgebildeten Spaltrohr ausgebildet. Bei einem solchen Motor weist die Trennkalotte eine halbkugelförmige Gestalt auf und der Rotor weist eine korrespondierende halbkugelförmige Oberfläche auf, sodass der Rotor konzentrisch in der Trennkalotte angeordnet werden kann. Der Rotor ist dabei auf einer Lagerkugel gelagert, deren Oberfläche ebenfalls konzentrisch zu der Rotoroberfläche und der Trennkalotte gelegen ist. So kann der Rotor um die Lagerkugel nicht nur rotieren, sondern auch eine Pendelbewegung quer zur Drehachse ausführen.

Gegenstand der Erfindung ist ebenfalls ein Pumpenaggregat, welches als Antriebsmotor einen Elektromotor gemäß der vorangehenden Beschreibung aufweist. Dieses Pumpenaggregat kann insbesondere ein Umwälzpumpenaggregat, beispielsweise ein Heizungs- oder Brauchwasser-Umwälzpumpenaggregat sein. Bei diesen kommt es, wie oben beschrieben, auf eine kostengünstige Ausgestaltung und auf einen hohen Wirkungsgrad an, da diese Pumpenaggregate lange Laufzeiten aufweisen, sodass hier auf Energieeffizienz besondere Wert gelegt wird.

Nachfolgend wird die Erfindung beispielhaft anhand der beigefügten Figuren beschrieben. In diesen zeigt:
- Fig. 1: eine teilweise geschnittene und explodierte Ansicht eines Elektromotors gemäß der Erfindung,
- Fig. 2: eine geschnittene Detailansicht des Stators des Elektromotors gemäß Fig. 1 und
- Fig. 3: schematisch einen Ausschnitt des Polringes des Rotors gemäß Fig. 1.

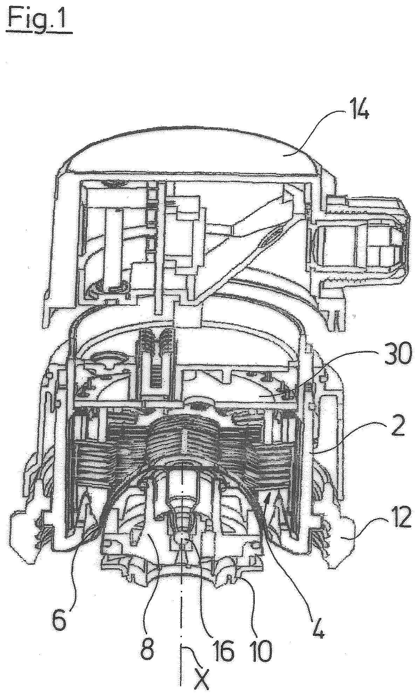

Der in Fig. 1 gezeigte Motor bildet Teil eines Umwälzpumpenaggregates. Der Motor besteht aus einem Statorgehäuse 2, in dessem Inneren ein Stator 4 angeordnet ist. Der Stator 4 umgibt ein Spaltrohr 6, welches den Statorraum im Inneren des Statorgehäuses 2 von einem Rotorraum trennt, in welchem der Rotor 8 angeordnet ist. Der Rotor 8 trägt an seiner freien axialen Stirnseite ein Laufrad 10 des Pumpenaggregates. Hier nicht gezeigt ist ein das Laufrad 10 umgebendes Pumpengehäuse. Dieses wird mittels der Überwurfmutter 12 an dem Statorgehäuse 2 fixiert. An dem den Rotor 8 abgewandten Axialende des Statorgehäuses 2 ist an dieses axialseitig ein Elektronikgehäuse 14 angesetzt.

Bei dem hier gezeigten Elektromotor handelt es sich um einen Kugelmotor, d. h. das Spaltrohr 6 ist kalottenförmig bzw. halbkugelförmig als Trennkalotte ausgebildet und der Rotor 8 ist korrespondierend halbkugelförmig ausgebildet und auf einer Lagerkugel 16 gelagert. Die Lagerung auf der Lagerkugel 16 ermöglicht dem Rotor nicht nur eine Rotation um die Drehachse X sondern auch eine gewisse Pendelbewegung normal zur Drehachse X. Der Rotor 8 weist einen an seinem Außenumfang angeordneten Polring 18 auf, in welchem permanentmagnetische Rotorpole ausgebildet sind. Dazu ist der Polring 18 aus einem hartmagnetischen Material ausgebildet und entsprechend magnetisiert.

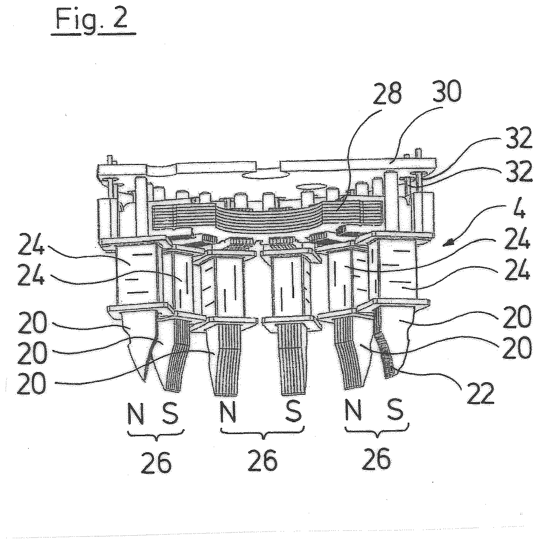

Der Stator 4, welcher im Detail in Fig. 2 gezeigt ist, besteht aus einer Vielzahl von sich axial, d. h. parallel zur Drehachse X erstreckenden Polstegen 20. An ihrem freien Ende 22 sind die Polstege 20 jeweils korrespondierend zur Form des Spaltrohres 6 gekrümmt, sodass die Polstege 20 sich mit ihren freien Enden 22 von außen an das Spaltrohr 6 20 sich mit ihren freien Enden 22 von außen an das Spaltrohr 6 anlegen können. Die Polstege 20 sind in bekannter Weise als Blechpakte aus einem weichmagnetischen Material, insbesondere Eisenblechen ausgebildet. Jeder Polsteg 20 trägt eine Spule 24, welche bei Bestromung zu einer Magnetisierung des jeweiligen Polsteges 20 führt. Die Spulen 24 sind so elektrisch miteinander verschaltet, dass stets zwei benachbarte Spulen 24 in Reihe geschaltet sind, sodass zwei benachbarte Polstege 20 ein Statorpolpaar 26 bilden. Dadurch, dass die Spulen 24 auf den Polstegen 20 eines Statorpolpaares 26 in Reihe geschaltet sind, werden bei Bestromung der Spulen 24 in den nebeneinanderliegenden Polstegen entgegengesetzt gerichtete Magnetfelder erzeugt, wie in Fig. 2 schematisch dargestellt ist, an einem Polsteg wird am freien Ende ein magnetischer Südpol S und an einem Polsteg am freien Ende ein magnetischer Nordpol N erzeugt. In dem hier gezeigten Beispiel sind alle Polstege 20 über ein ringförmiges weichmagnetisches Verbindungselement 28 miteinander verbunden. Es ist jedoch zu verstehen, dass das Verbindungselement 28 nicht durchgehend ausgebildet sein müsste, sondern, dass vielmehr lediglich die Polstege 20 eines Statorpolpaares 26 über ein solches weichmagnetisches Verbindungselement 28 miteinander verbunden sein könnten. Eine Verbindung zu den anderen Polstegen ist nicht erforderlich, da der magnetische Fluss immer nur innerhalb eines Statorpolpaares von einem Polsteg 20 zu dem benachbarten Polsteg 20 erfolgt. Darüber hinaus ist auch nicht die Anordnung einer Spule 24 auf jedem der Polstege 20 zwingend notwendig. Vielmehr könnte in jedem Statorpolpaar 26 auch nur eine Spule, beispielsweise an dem Verbindungselement 28, welches die beiden Polstege 20 miteinander verbindet, angeordnet sein.

Neben der Reihenschaltung der Spulen 24 eines Statorpolpaares 26 sind zusätzlich noch die Spulen 24 eines diametral gegenüberliegenden Statorpolpaares 26 des Stators 4 mit diesen Spulen 24 in Reihe geschaltet. So werden bei der hier gezeigten Anordnung von zwölf Polstegen 20 drei Gruppen von gleichzeitig bestrombaren Spulen 24 geschaffen, d. h. hierbei handelt es sich um einen dreiphasigen Motor. Die elektrische Verschaltung der Spulen 24 erfolgt in diesem Ausführungsbeispiel durch eine Leiterplatte 30, in welche die einzelnen Spulen 24 mit Anschlussstiften 32 zur elektrischen Kontaktierung eingreifen. Die Leiterplatte 30 kann darüber hinaus elektronische Bauteile einer Motorelektronik tragen, sodass wesentliche Teile der Motorelektronik hier in das Statorgehäuse 2 integriert werden können.

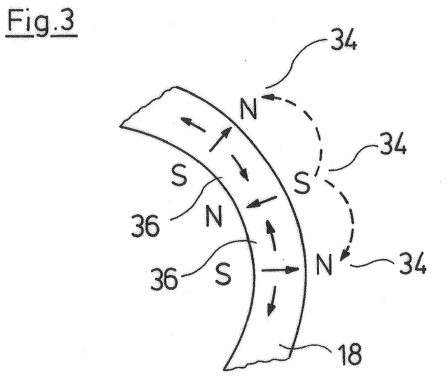

Der Rotor 8 weist wie oben ausgeführt einen Polring 18 auf. In diesem sind, wie in Fig. 3 gezeigt, durch Magnetisierung die einzelnen Rotorpole 34 ausgebildet. In diesem Ausführungsbeispiel ist eine Halbach-Magnetisierung vorgesehen, wie sie in Fig. 3 dargestellt ist. Bei dieser ist zwischen den radial magnetisierten Rotorpolen 34 jeweils ein Zwischenabschnitt 36 vorgesehen, welcher in Umfangsrichtung magnetisiert ist. Dabei wird in der Fig. 3 die Richtung der Magnetisierung durch die Pfeile vom Südpol zum Nordpol angedeutet. Durch diese Art der Magnetisierung wird erreicht, dass die magnetischen Felder im Wesentlichen zum Außenumfang des Rotors hin gerichtet sind und nicht in das Innere des Rotors. D. h. es werden magnetische Felder besonders an der dem Stator 4 zugewandten Außenseite des Polringes 18 erzeugt. Da der magnetische Fluss durch den Polring auch hier von einem Rotorpol 34 direkt zu dem benachbarten Rotorpol 34 und nicht zum diametral gegenüberliegenden Rotorpol erfolgt, ist es nicht erforderlich, im Inneren des Rotors 8 Magnetmaterial, sei es weichmagnetisches oder hartmagnetisches vorzusehen. Wie in Fig. 1 zu erkennen ist, kann der Rotor vielmehr im Inneren im Wesentlichen hohl und damit leicht ausgebildet werden. Darüber hinaus kann die Lagerung auf der Lagerkugel 16 im Inneren des Rotors 8 angeordnet werden.

### Bezugszeichenliste

- 2 -: Statorgehäuse
- 4 -: Stator
- 6 -: Spaltrohr
- 8 -: Rotor
- 10 -: Laufrad
- 12 -: Überwurfmutter
- 14 -: Elektronikgehäuse
- 16 -: Lagerkugel
- 18 -: Polring
- 20 -: Polstege
- 22 -: freies Ende
- 24 -: Spulen
- 26 -: Statorpolpaare
- 28 -: Verbindungselement
- 30 -: Leiterplatte
- 32 -: Anschlussstifte
- 34 -: Rotorpole
- 36 -: Zwischenabschnitt

- S -: Südpol
- N -: Nordpol
- X -: Drehachse

## Patentansprüche

1. Elektromotor mit einem Stator (4), einem Rotor (8) und einem zwischen dem Stator (4) und dem Rotor (8) angeordneten Spaltrohr (6), wobei
der Elektromotor als 2- oder 3-Phasen-Motor ausgebildet ist, der Stator (4) mehrere Statorpolpaare (26) aufweist, welche jeweils von zwei benachbarten Statorpolen (20) gebildet werden, die so ausgebildet sind, dass sie entgegengesetzt gepolte Magnetfelder erzeugen, die Statorpole als Polstege (20) mit darauf angeordneten Spulen (24) ausgebildet sind, wobei die Spulen (24) zweier benachbarter, ein Statorpolpaar (26) bildender Statorpole (20) elektrisch in Reihe geschaltet sind, und der Rotor (8) eine Mehrzahl über den Umfang verteilter magnetischer Rotorpole (34) aufweist und so ausgestaltet ist, dass ein magnetischer Fluss zwischen zwei benachbarten Rotorpolen (34) möglich ist, **dadurch gekennzeichnet, dass** die Spulen (24) der Statorpole (20) zweier diametral gegenüberliegender Statorpolpaare (26) elektrisch in Reihe geschaltet sind, so dass jeweils zwei diametral gegenüberliegende Statorpolpaare (26) gleichzeitig bestromt werden und dass die Spulen (24) durch eine am Stator (4) angeordnete Leiterplatte (30) miteinander verschaltet sind.

2. Elektromotor nach Anspruch 1, **dadurch gekennzeichnet, dass** die Polstege (20) durch ein weichmagnetisches Verbindungselement (28) miteinander verbunden sind.

3. Elektromotor nach einem der vorangehenden Ansprüche, **dadurch gekennzeichnet, dass** alle Spulen (24) identisch ausgebildet sind.

4. Elektromotor nach einem der vorangehenden Ansprüche, **dadurch gekennzeichnet, dass** die Leiterplatte (30) zumindest Teile einer Motorelektronik trägt.

5. Elektromotor nach einem der vorangehenden Ansprüche, **dadurch gekennzeichnet, dass** der Elektromotor als 3-Phasen-Motor mit sechs Statorpolpaaren ausgebildet ist.

6. Elektromotor nach einem der vorangehenden Ansprüche, **dadurch gekennzeichnet, dass** der Rotor (8) Halbach-magnetisiert ist.

7. Elektromotor nach einem der vorangehenden Ansprüche, **dadurch gekennzeichnet, dass** der Rotor (8) einen Polring (18) aus Magnetmaterial aufweist, in welchem die Rotorpole (34) ausgebildet sind.

8. Elektromotor nach einem der vorangehenden Ansprüche, **dadurch gekennzeichnet, dass** er als Kugelmotor mit einem als Trennkalotte ausgebildeten Spaltrohr (6) ausgebildet ist.

9. Pumpenaggregat, **dadurch gekennzeichnet, dass** es als Antriebsmotor einen Elektromotor nach einem der vorangehenden Ansprüche aufweist.

10. Pumpenaggregat nach Anspruch 9, **dadurch gekennzeichnet, dass** es als Umwälzpumpenaggregat und insbesondere als Heizungs- oder Brauchwasser-Umwälzpumpenaggregat ausgebildet ist.

## Claims

1. An electric motor comprising a stator (4), a rotor (8) and a can (6) arranged between the stator (4) and the rotor (8), wherein the electric motor is designed as a 2- or 3-phase motor, the stator (4) includes several stator pole pairs (26), which are each formed by two adjacent stator poles (20), which are configured to generate oppositely polarized magnetic fields, the stator poles are designed as pole webs (20) with coils (24) arranged thereon, wherein the coils (24) of two adjacent stator poles (20) forming a stator pole pair (26) are electrically connected in series, and the rotor (8) includes a plurality of magnetic rotor poles (34) distributed over the circumference, and is configured to enable a magnetic flux between two adjacent rotor poles (34), **characterized in that** the coils (24) of the stator poles (20) of two diametrically opposed stator pole pairs (26) are electrically connected in series, so that current is supplied to two diametrically opposed stator pole pairs (26) at the same time in each case, and that the coils (24) are wired together via a circuit board (30) arranged on the stator (4).

2. The electric motor according to Claim 1, **characterized in that** the pole webs (20) are joined together by a magnetically soft connection element (28).

3. The electric motor according to one of the preceding claims, **characterized in that** all coils (24) have the same design.

4. The electric motor according to one of the preceding claims, **characterized in that** the circuit board (30) carries at least parts of motor electronics.

5. The electric motor according to one of the preceding claims, **characterized in that** the electric motor is designed as a 3-phase motor with six stator pole pairs.

6. The electric motor according to one of the preceding claims, **characterized in that** the rotor (8) is Halbach magnetized.

7. The electric motor according to one of the preceding claims, **characterized in that** the rotor (8) has a pole ring (18) made out of a magnetic material, in which the rotor poles (34) are formed.

8. The electric motor according to one of the preceding claims, **characterized in that** the motor is designed as a spherical motor with a can (6) designed as a separating calotte.

9. A pumping set, **characterized in that** it comprises an electric motor according to one of the preceding claims as the drive motor.

10. The pumping set according to Claim 9, **characterized in that** the pumping set is designed as a recirculation pumping set and in particular as a heating or industrial water recirculation pumping set.

## Revendications

1. Moteur électrique comprenant un stator (4), un rotor (8) et un tube d'entrefer (6) agencé entre le stator (4) et le rotor (8),
le moteur électrique étant réalisé sous la forme d'un moteur bi- ou triphasé, le stator (4) comprenant plusieurs paires de pôles de stator (26) formées chacune par deux pôles de stator (20) voisins, qui sont conçus pour produire des champs magnétiques à pôles opposés, les pôles de stator étant réalisés sous la forme de nervures de pôle (20) avec des bobines (24) agencées sur celles-ci, les bobines (24) de deux pôles de stator (20) voisins formant une paire de pôles de stator (26) étant connectées électriquement en série, et le rotor (8) comprenant une pluralité de pôles de rotor (34) magnétiques répartis sur la circonférence et étant conçu de telle sorte qu'un flux magnétique entre deux pôles de rotor (34) voisins soit possible, **caractérisé en ce que** les bobines (24) des pôles de stator (20) de deux paires de pôles de stator (26) diamétralement opposées sont connectées électriquement en série de sorte que deux paires de pôles de stator (26) diamétralement opposées soient alimentées simultanément et que les bobines (24) soient connectées mutuellement par une carte de circuit imprimé (30) disposée au stator (4).

2. Moteur électrique selon la revendication 1, **caractérisé en ce que** les nervures polaires (20) sont reliées mutuellement par un élément de liaison (28) magnétique doux.

3. Moteur électrique selon l'une quelconque des revendications précédentes, **caractérisé en ce que** toutes les bobines (24) sont réalisées de manière identique.

4. Moteur électrique selon l'une quelconque des revendications précédentes, **caractérisé en ce que** la carte de circuit imprimé (30) porte au moins des parties d'une électronique de moteur.

5. Moteur électrique selon l'une quelconque des revendications précédentes, **caractérisé en ce que** le moteur électrique est réalisé sous la forme d'un moteur triphasé avec six paires de pôles de stator.

6. Moteur électrique selon l'une quelconque des revendications précédentes, **caractérisé en ce que** le rotor (8) est magnétisé par réseau de Halbach.

7. Moteur électrique selon l'une quelconque des revendications précédentes, **caractérisé en ce que** le rotor (8) comprend une bague de pôle (18) en matériau magnétique dans laquelle sont formés les pôles de rotor (34).

8. Moteur électrique selon l'une quelconque des revendications précédentes, **caractérisé en ce qu'**il est réalisé sous la forme d'un moteur à bille avec un tube d'entrefer (6) réalisé sous la forme d'une calotte de séparation.

9. Groupe motopompe, **caractérisée en ce qu'**il comprend un moteur électrique comme moteur d'entraînement selon l'une quelconque des revendications précédentes.

10. Groupe motopompe selon la revendication 9, **caractérisé en ce qu'**il est conçu sous la forme d'un groupe motopompe de circulation et en particulier sous la forme d'un groupe motopompe de circulation de chauffage ou d'eau de service.
